(19) 

Europäisches
Patentamt
European
Patent Office
Office européen
des brevets

(11) **EP 3 978 430 A1**

(12) **EUROPEAN PATENT APPLICATION**
published in accordance with Art. 153(4) EPC

(43) Date of publication:
**06.04.2022 Bulletin 2022/14**

(21) Application number: **20815295.9**

(22) Date of filing: **27.05.2020**

(51) International Patent Classification (IPC):
**C01B 25/45** $^{(2006.01)}$    **H01M 4/58** $^{(2010.01)}$
**H01M 10/054** $^{(2010.01)}$

(52) Cooperative Patent Classification (CPC):
**C01B 25/45; H01M 4/58; H01M 10/054;**
Y02E 60/10

(86) International application number:
**PCT/JP2020/020985**

(87) International publication number:
**WO 2020/241711 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2019 JP 2019098308**

(71) Applicants:
• **Sagami Chemical Research Institute
Ayase-shi
Kanagawa 252-1193 (JP)**

• **Tosoh Corporation
Yamaguchi 746-8501 (JP)**

(72) Inventors:
• **OKADA Masaki
Ayase-shi, Kanagawa 252-1123 (JP)**
• **TAKAHASHI Kennichi
Ayase-shi, Kanagawa 252-1193 (JP)**
• **TANAKA Ryoji
Ayase-shi, Kanagawa 252-1193 (JP)**

(74) Representative: **Müller-Boré & Partner
Patentanwälte PartG mbB
Friedenheimer Brücke 21
80639 München (DE)**

(54) **SODIUM TRANSITION METAL POLYANION AND PRODUCTION METHOD THEREOF**

(57) To provide a sodium transition metal polyanion suitable as a cathode active material of a sodium secondary battery, and a simple method for producing it.

A sodium transition metal polyanion, which has a purity of 90 mass% or higher, has a crystallite size of 90 Å or longer and 400 Å or shorter, and is represented by the formula $Na_{3-x}MPO_4CO_3$ (M is at least one member selected from the group consisting of Fe, Mn, Ni and Co, and $0 \leqq x \leqq 2$).

Fig. 1

EP 3 978 430 A1

**Description**

TECHNICAL FIELD

The present disclosure relates to a sodium transition metal polyanion suitable as a cathode active material of a sodium secondary battery, and a method for producing it.

BACKGROUND ART

Sodium secondary batteries, which do not use lithium, one of rare metals, attract attention as a post-lithium secondary battery. A transition metal oxide, or a sodium and transition metal-containing material containing a counter anion, such as a polyanion or a fluoride ion, and sodium, has been studied, as a cathode active material of a sodium secondary battery. Among sodium and transition metal-containing compounds, a sodium-containing transition metal polyanion is expected to achieve a high charge and discharge capacity.

Non-Patent Document 1 reports that a sodium-containing transition metal carbophosphate ($Na_3MPO_4CO_3$, M=Fe, Mn, Ni, Co or the like) having a Sidorenkite structure (or also called a Bonshtedite structure) may function as a sodium ion electrode material.

Non-Patent Document 2 and Patent Document 1 disclose electrochemical properties of a sodium-containing manganese carbophosphate ($Na_3MnPO_4CO_3$) obtained by hydrothermal method, as a cathode active material of a sodium secondary battery. The electrochemical capacity was 120 mAh/g or lower at the initial charge and discharge.

PRIOR ART DOCUMENTS

PATENT DOCUMENT

Patent Document 1: JP-A-2013-520383

NON-PATENT DOCUMENTS

Non-Patent Document 1: H. Chen et al., Journal of the American Chemical Society, 134, 19619-19627 (2012)
Non-Patent Document 2: H. Chen et al., Chemistry of Materials, 25, 2777-2786 (2013)

DISCLOSURE OF INVENTION

TECHNICAL PROBLEM

The object of the present disclosure is to provide at least one of a sodium transition metal polyanion suitable as a cathode active material of a sodium secondary battery, and a simple method for producing it.

SOLUTION TO PROBLEM

The present inventors have conducted extensive studies on the sodium transition metal polyanion and as a result, found that a sodium secondary battery with a high capacity, which has not been achieved by a conventional technique, can be constituted by using a sodium transition metal polyanion obtained by subjecting a composition containing a sodium source, a transition metal source, a phosphate source, a carbonate source and water, to hydrothermal treatment under specific conditions, as a cathode active material of a sodium secondary battery.

That is, the summary of the present disclosure is as follows.

[1] A sodium transition metal polyanion, which has a purity of 90 mass% or higher, has a crystallite size of 90 Å or longer and 400 Å or shorter, and is represented by the formula $Na_{3-x}MPO_4CO_3$ (M is at least one member selected from the group consisting of Fe, Mn, Ni and Co, and $0 \leqq x \leqq 2$).

[2] The sodium transition metal polyanion according to the above [1], which has lattice constants a of 8.800 Å or longer and 9.050 Å or shorter, b of 6.570 Å or longer and 6.780 Å or shorter, and c of 5.100 Å or longer and 5.190 Å or shorter.

[3] The sodium transition metal polyanion according to the above [1] or [2], wherein M in the formula $Na_{3-x}MPO_4CO_3$ is at least one of Fe and Mn.

[4] A method for producing the sodium transition metal polyanion as defined in any one of the above [1] to [3], which comprises a step of subjecting a composition containing a sodium source, a transition metal source, a phosphate source, a carbonate source and water to hydrothermal treatment, and wherein the hydrothermal treatment temperature is 140°C or higher and 280°C or lower, and the pH of the composition is 7.5 or higher.

[5] The method for producing the sodium transition metal polyanion according to the above [4], wherein the hydrothermal treatment temperature is 150°C or higher and 250°C or lower, and the pH of the composition is 9.0 or higher and 12.0 or lower.

[6] The method for producing the sodium transition metal polyanion according to the above [4] or [5], wherein the transition metal source is at least one member selected from the group consisting of an oxide, a hydroxide, an oxyhydroxide, a sulfite, a sulfate, a nitrate, a chloride, an acetate, a bromide and a fluoride, containing at least one member selected from the group consisting of iron, manganese, nickel and cobalt.

[7] A cathode active material containing the sodium transition metal polyanion as defined in any one of the above [1] to [3].

[8] A sodium secondary battery comprising a cathode active material containing the sodium transition metal polyanion as defined in any one of the above [1] to [3].

ADVANTAGEOUS EFFECTS OF INVENTION

According to the present disclosure, it is possible to provide at least one of a sodium transition metal polyanion suitable as a cathode active material of a sodium secondary battery, and a simple method for producing it.

BRIEF DESCRIPTION OF DRAWINGS

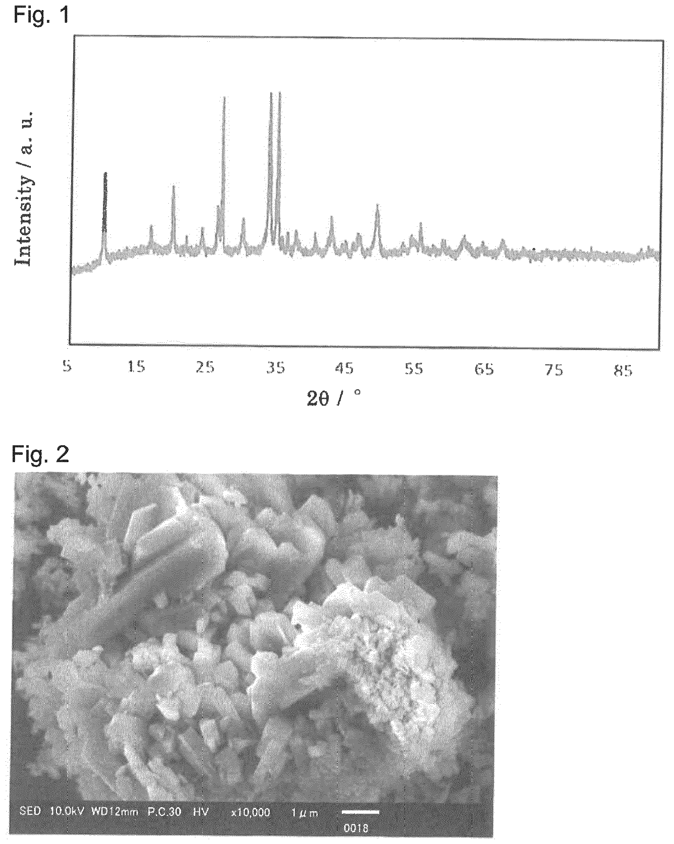

Fig. 1 is a powder X-ray diffraction pattern of the sodium iron carbophosphate in Example 1-2.
Fig. 2 is a SEM photograph of the sodium iron carbophosphate in Example 1-2.

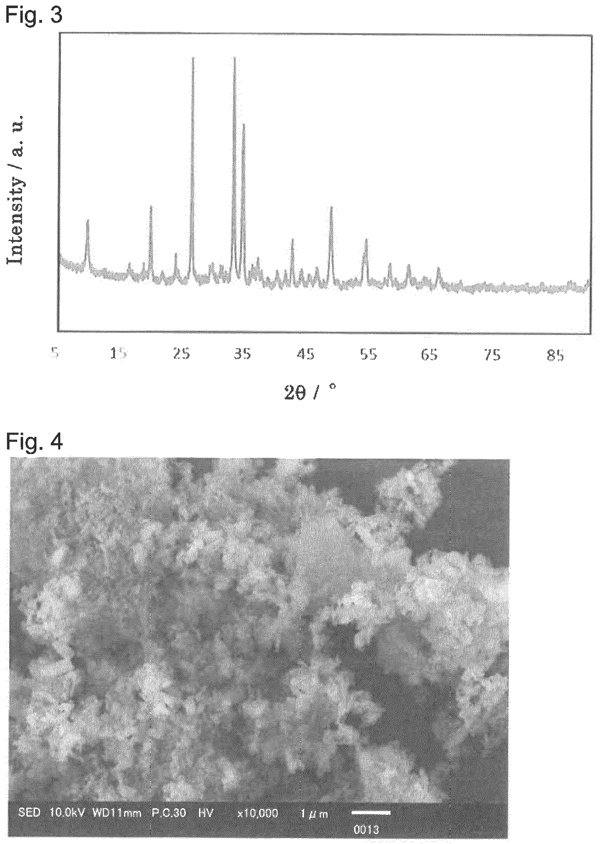

Fig. 3 is a powder X-ray diffraction pattern of the sodium manganese carbophosphate in Example 2-1.
Fig. 4 is a SEM photograph of the sodium manganese carbophosphate in Example 2-1.

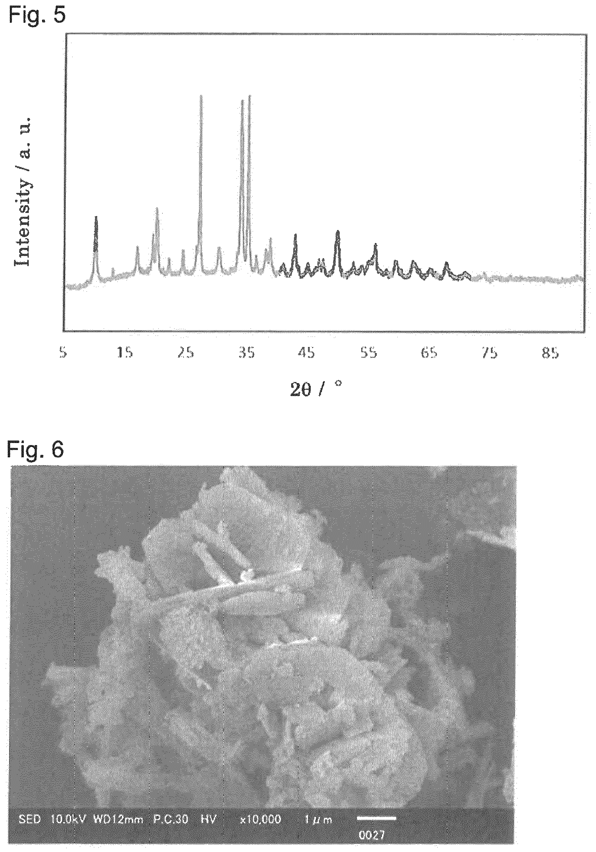

Fig. 5 is a powder X-ray diffraction pattern of the sodium nickel carbophosphate in Example 3-3.
Fig. 6 is a SEM photograph of the sodium nickel carbophosphate in Example 3-3.

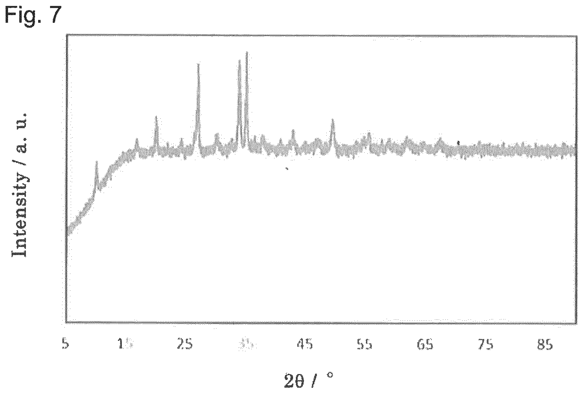

Fig. 7 is a powder X-ray diffraction pattern of the sodium cobalt carbophosphate in Example 4-3.

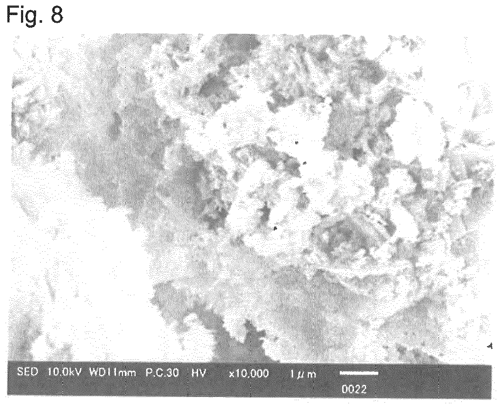

Fig. 8 is a SEM photograph of the sodium cobalt carbophosphate in Example 4-3.

DESCRIPTION OF EMBODIMENTS

Now, preferred embodiments of the sodium transition metal polyanion of the present disclosure will be described.

The sodium transition metal polyanion according to the present embodiment (hereinafter also referred to as "the polyanion of the present embodiment") is a sodium transition metal polyanion represented by the formula $Na_{3-x}MPO_4CO_3$ (M is at least one member selected from the group consisting of Fe, Mn, Ni and Co, and $0 \leqq x \leqq 2$), preferably a synthetic sodium transition metal polyanion (that is sodium transition metal polyanion which is not naturally occurring). In the formula, M is at least one member selected from the group consisting of Fe, Mn, Ni and Co, preferably at least one member selected from the group consisting of Fe, Mn and Ni, at least either one of Fe and Ni, at least either one of Fe and Mn, at least either one of Mn and Ni, Fe or Mn, Fe, Mn, or Ni.

The sodium transition metal polyanion represented by the formula $Na_{3-x}MPO_4CO_3$ (M is at least one member selected from the group consisting of Fe, Mn, Ni and Co, and $0 \leqq x \leqq 2$) may be considered as a carbophosphate represented by the formula $Na_{3-x}MPO_4CO_3$ (M is at least one member selected from the group consisting of Fe, Mn, Ni and Co, and $0 \leqq x \leqq 2$).

The polyanion of the present embodiment is a compound containing, as the anion, a phosphate ion ($PO_4^{3-}$) and a carbonate ion ($CO_3^{2-}$), and may be a sodium transition metal polyanion in which a part of such anion is replaced by an oxide ion ($O^{2-}$) (hereinafter also referred to as an "oxygen-replaced sodium transition metal polyanion").

It is preferred that the polyanion of the present embodiment does not contain at least one anion selected from the group consisting of a chloride ion ($Cl^-$), a bromide ion ($Br^-$), a sulfate ion ($SO_4^{2-}$) and a nitrate ion ($NO_3^-$) as impurities, and it is more preferred that the polyanion does not contain a chloride ion.

The polyanion of the present embodiment has a purity of 90 mass% or higher, and preferably any of 92 mass% or higher, 95 mass% or higher, 97 mass% or higher, and 99 mass% or higher. The purity of the polyanion of the present embodiment is the content of the sodium transition metal polyanion represented by the formula $Na_{3-x}MPO_4CO_3$ (hereinafter also referred to as "NaMPC"), determined by X-ray. A synthetic sodium transition metal polyanion artificially synthetized, obtainable by the conventional production method, and a natural sodium transition metal polyanion naturally occurring, form with a large amount of crystal phases other than NaMPC (hereinafter also referred to as "by-product phase"). Thus, the purity (NaMPC content) is low. Since it is hard to separate the by-product phase from a once formed sodium transition metal polyanion, it is difficult to increase the purity (NaMPC content) of such conventional sodium transition metal polyanions.

On the other hand, the polyanion of the present embodiment is a sodium transition metal polyanion having a low content of the by-product phase, that is a synthetic sodium transition metal polyanion having a high purity, more specifically, a sodium transition metal polyanion having the by-product phase reduced to such an extent that sodium ions will readily be deintercalated and intercalated. The purity of the polyanion of the present embodiment is 100 mass% or lower, and when the by-product phase is not contained or when the content of the by-product phase is the measurement limit or lower, the purity is 100 mass%, and the polyanion can be considered to be in a NaMPC single phase. By the polyanion of the present embodiment having both such a purity and the after-described crystallite size, as compared with the conventional sodium transition metal polyanion, intercalation and deintercalation of sodium ions will readily occur. Thus, the polyanion of the present embodiment is expected to develop high charge and discharge characteristics when used as a cathode active material of a sodium secondary battery.

According to another embodiment, the polyanion of the present embodiment may be considered as a sodium transition metal polyanion composition containing sodium transition metal polyanion represented by the formula $Na_{3-x}MPO_4CO_3$ (M is at least one member selected from the group consisting of Fe, Mn, Ni and Co, and $0 \leqq x \leqq 2$) in an amount of any of 90 mass% or higher, 92 mass% or higher, 95 mass% or higher, 97 mass% or higher, and 99 mass% or higher. In a case where the purity is less than 100 mass%, the polyanion of the present embodiment may be considered also as a composition containing NaMPC.

The purity (mass%) of the polyanion of the present embodiment is a value of the NaMPC content determined by X-ray, and is a content of the crystal phase of NaMPC determined by the quantitative analysis of a powder X-ray diffraction (hereinafter also referred to as "XRD") pattern. The NaMPC content is a value determined by quantitative analysis of an XRD pattern by the reference intensity ratio (hereinafter also referred to as "RIR") method. As the XRD measurement conditions in the present embodiment, the following conditions may be mentioned, and the NaMPC content is preferably a value obtained by the RIR method from an XRD pattern measured under the conditions.

| | |
|---|---|
| Radiation source | : CuK$\alpha$ rays ($\lambda$=1.5405 Å) |
| Measurement mode | : Step scanning |
| Scanning condition | : 20°/min |
| Measurement time | : 3 seconds |
| 2$\theta$ | : 5° to 90° |

The XRD pattern may be measured by using a conventional X-ray diffraction apparatus (for example, SmartLab, manufactured by Rigaku Corporation). Using data processing software (for example, PDXL-2) attached to the X-ray diffraction apparatus, the crystal phase may be identified by Rietveld refinement. After the identification, the NaMPC content can be analyzed by the RIR method.

The RIR value employed in the RIR method (that is, the XRD intensity ratio when the substance to be measured and the reference substance are equivalent), may be a value in PDF (Powder Diffraction File) of ICDD (International Centre For Diffraction Data). As the main RIR values, the following may be mentioned.

| | |
|---|---|
| $Na_3MnPO_4CO_3$ | : 0.78 (PDF No. 01-084-0023) |
| $Na_3FePO_4CO_3$ | : 0.81 (PDF No. 01-089-7482) |
| $Na_3PO_4$ | : 1.27 (PDF No. 01-072-7303) |
| $Na_2CO_3$ | : 1.44 (PDF No. 01-086-0314) |

Regarding NaNiPC and NaCoPC, RIR values in PDF No. 01-089-7482 may also be used.

As the by-product phase contained in the polyanion of the present embodiment, at least one of an oxide represented by the formula MOx (M is at least one member selected from the group consisting of Co, Ni, Mn and Fe, and x is 1 or higher and 1.33 or lower) and a hydroxide represented by the formula M(OH)$_y$ (M is at least one member selected from the group consisting of Co, Ni, Mn and Fe, and y is higher than 0 and 2 or lower) may be mentioned.

In the present embodiment, as the by-product phase of the sodium transition metal polyanion represented by the formula $Na_{3-x}FePO_4CO_3$ (hereinafter also referred to as "NaFePC"), at least one member selected from the group consisting of $FeO_{1.5}$, $FeO_{2/3}$ and $Fe(OH)_2$ may, for example, be mentioned.

In the present embodiment, as the by-product phase of the sodium transition metal polyanion represented by

the formula $Na_{3-x}MnPO_4CO_3$ (hereinafter also referred to as "NaMnPC"), at least one member selected from the group consisting of MnO, $MnO_{1.5}$, $MnO_{2/3}$ and $Mn(OH)_2$ may, for example, be mentioned.

In the present embodiment, as the by-product phase of the sodium transition metal polyanion represented by the formula $Na_{3-x}NiPO_4CO_3$ (hereinafter also referred to as "NaNiPC"), at least one of NiO and $Ni(OH)_2$ may, for example, be mentioned.

In the present embodiment, as the by-product phase of the sodium transition metal polyanion represented by the formula $Na_{3-x}CoPO_4CO_3$ (hereinafter also referred to as "NaCoPC"), at least one member selected from the group consisting of $CoO_{1.5}$, $CoO_{2/3}$ and $Co(OH)_2$ may, for example, be mentioned.

The polyanion of the present embodiment has a crystallite size of 90 Å or longer and 400 Å or shorter, preferably 95 Å or longer and 360 Å or shorter. By the polyanion of the present embodiment having a purity of 90 mass% or higher and having a crystallite size within such a range, intercalation and deintercalation of sodium ions will efficiently proceed, and with such a polyanion, the resulting cathode active material of a sodium secondary battery is expected to achieve a high charge and discharge capacity.

In the present embodiment, the crystallite size is preferably a size obtained by Williamson-Hall method (hereinafter also referred to as "WH size") obtained from an XRD pattern. The WH size is a crystallite size obtained from two or more XRD peaks attributable to the sodium transition metal polyanion (NaMPC) in the XRD pattern. Specifically, with respect to two or more, preferably two or more and four or less, more preferably three, XRD peaks attributable to the sodium transition metal polyanion (NaMPC), the following plotting is conducted. From the obtained plots at a plurality of points by the least-squares method, the following first-order approximation is obtained, and the inverse of the y-intercept of the first-order approximation, is the crystallite size (WH size).

<Plot>

$$Y=(\beta \cdot \sin\theta)/\lambda$$

$$X=\sin\theta/\lambda$$

<First-order approximation>

$$Y=2\eta \cdot X+(1/\varepsilon) \qquad \text{formula 1}$$

In these formulae, $\beta$ is the half width (°), $\theta$ is the diffraction angle (°), $\lambda$ is the wavelength (nm) of the radiation source, $\eta$ is the random distortion, and $\varepsilon$ is the crystallite size (Å), and, $1/\varepsilon$ in the first-order approximation is the y-intercept. $2\eta$ corresponds to the slope of the first-order approximation obtained from plots at a plurality of points by the least-squares method.

The WH size in the present embodiment is preferably obtained from XRD peaks corresponding to (020) plane, (220) plane and (002) plane in an XRD pattern. Specifically, with respect to XRD peaks corresponding to the (020) plane, the (220) plane and (002) plane, the above plotting is conducted. From the obtained plots at the three points by the least-squares method, the above first-order approximation is obtained, and the inverse of the y-intercept of the first-order approximation, is taken as the crystallite size.

XRD peaks corresponding to the (020) plane, (121) plane and (202) plane (hereinafter also referred to as "main peak group") of the polyanion of the present embodiment when $CuK\alpha$ rays ($\lambda$=1.5405Å) are used as a radiation source, may be at the following $2\theta$.

(020) plane: $2\theta$=26.39° to 27.06°
(220) plane: $2\theta$=33.19° to 33.88°
(002) plane: $2\theta$=34.59° to 34.99°

In the present embodiment, $2\theta$ of the main peak group of NaFePC may be the following values.

(020) plane: 2θ=26.86° to 26.94°
(220) plane: 2θ=33.56° to 33.69°
(002) plane: 2θ=34.76° to 34.86°

In the present embodiment, 2θ of the main peak group of NaMnPC may be the following values.
(020) plane: 2θ=26.39° to 26.47°
(220) plane: 2θ=33.19° to 33.29°
(002) plane: 2θ=34.59° to 34.77°

In the present embodiment, 2θ of the main peak group of NaNiPC may be the following values.
(020) plane: 2θ=26.91° to 27.06°
(220) plane: 2θ=33.68° to 33.88°
(002) plane: 2θ=34.84° to 34.99°

In the present embodiment, 2θ of the main peak group of NaCoPC may be the following values.
(020) plane: 2θ=26.88° to 26.94°
(221) plane: 2θ=33.63° to 33.69°
(002) plane: 2θ=34.84° to 34.88°

In the present embodiment, the crystallite size of NaFePC is preferably 150 Å or longer and 400 Å or shorter, more preferably 170 Å or longer and 360 Å or shorter. In another embodiment, the crystallite size of NaFePC is preferably 170 Å or longer, 250 Å or longer, 270 Å or longer, or 300 Å or longer, and 400 Å or shorter, 370 Å or shorter, 350 Å or shorter, 330 Å or shorter, or 320 Å or shorter.

In the present embodiment, the crystallite size of NaMnPC is preferably 90 Å or longer and 200 Å or shorter, more preferably 90 Å or longer and 180 Å or shorter. In another embodiment, the crystallite size of NaMnPC is preferably 95 Å or longer, 100 Å or longer, 120 Å or longer, or 140 Å or longer, and 190 Å or shorter, 175 Å or shorter, or 160 Å or shorter.

In the present embodiment, the crystallite size of NaNiPC is preferably 95 Å or longer and 300 Å or shorter, more preferably 100 Å or longer and 250 Å or shorter. In another embodiment, the crystallite size of NaNiPC is preferably 100 Å or longer, 110 Å or longer, or 150 Å or longer, and 250 Å or shorter, 230 Å or shorter, or 220 Å or shorter.

In the present embodiment, the crystallite size of NaCoPC is preferably 150 Å or longer and 400 Å or shorter, more preferably 180 Å or longer and 370 Å or shorter. In another embodiment, the crystallite size of NaCoPC is preferably 200 Å or longer, 210 Å or longer, or 220 Å or longer, and 380 Å or shorter, 300 Å or shorter, or 250 Å or shorter.

The polyanion of the present embodiment preferably has either a Bonshtedite structure or a Sidorenkite structure, or a Sidorenkite structure. The Sidorenkite structure is a structure having the vertices of octahedrons each composed of one transition metal atom and six oxygen atoms, shared with tetrahedrons each composed of one phosphorus atom and four oxygen atoms, and having the polyhedrons connected.

The polyanion of the present embodiment preferably belongs to a monoclinic crystal system. Further, it is preferred that the space group of the monocyclic crystal system belongs to at least one of P21/m and P21, more preferably to P21/m. The monoclinic crystal system is a crystal system such that the lattice constants a, b and c are different from one another, both α and γ are 90°, and, β is an angle other than 90°.

The polyanion of the present embodiment preferably has lattice constants a of 8.800 Å or longer and 9.050 Å or shorter, b of 6.570 Å or longer and 6.780 Å or shorter, c of 5.100 Å or longer and 5.190 Å or shorter, α of 90.00°, γ of 90.00°, and β of 89.00° or more and 90.50° or less. More preferred lattice constants may be a of 8.820 Å or longer and 9.030 Å or shorter, b of 6.580 Å or longer and 6.770 Å or shorter, c of 5.110 Å or longer and 5.180 Å or shorter, α of 90.00°, γ of 90.00°, and β of 89.10° or more and 90.20° or less.

In the present embodiment, NaFePC has lattice constants a of 8.930 Å or longer and 8.985 Å or shorter, preferably 8.940 Å or longer and 8.975 Å or shorter, more preferably 8.959 Å or longer and 8.970 Å or shorter, b of 6.600 Å or longer and 6.655 Å or shorter, preferably 6.610 Å or longer and 6.645 Å or shorter, more preferably 6.615 Å or longer and 6.635 Å or shorter, c of 5.125 Å or longer and 5.175 Å or shorter, preferably 5.135 Å or longer and 5.165 Å or shorter, more preferably 5.145 Å or longer and 5.159 Å or shorter, α of 90.00°, γ of 90.00°, β of 89.30° or more and 89.80° or less, preferably 89.50° or more and 89.70° or less.

In the present embodiment, NaMnPC has lattice constants a of 8.960 Å or longer and 9.050 Å or shorter, preferably 8.970 Å or longer and 9.030 Å or shorter, more preferably 8.981 Å or longer and 9.030 Å or shorter, further preferably 9.000 Å or longer and 9.025 Å or shorter, b of 6.705 Å or longer and 6.780 Å or shorter, preferably 6.715 Å or longer and 6.775 Å or shorter, more preferably 6.729 Å or longer and 6.770 Å or shorter, further preferably 6.745 Å or longer and 6.765 Å or shorter, c of 5.135 Å or longer and 5.190 Å or shorter, preferably 5.145 Å or longer and 5.180 Å or shorter, more preferably 5.150 Å or longer and 5.180 Å or shorter, $\alpha$ of 90.00°, $\gamma$ of 90.00°, $\beta$ of 89.90° or longer and 90.50° or shorter, preferably 90.10° or longer and 90.20°, more preferably 90.14° or longer and °90.20 or shorter.

In the present embodiment, NaNiPC has lattice constants a of 8.800 Å or longer and 8.940 Å or shorter, preferably 8.815 Å or longer and 8.930 Å or shorter, more preferably 8.885 Å or longer and 8.930 Å or shorter, further preferably 8.900 Å or longer and 8.925 Å or shorter, b of 6.570 Å or longer and 6.660 Å or shorter, preferably 6.580 Å or longer and 6.650 Å or shorter, more preferably 6.625 Å or longer and 6.645 Å or shorter, c of 5.100 Å or longer and 5.180 Å or shorter, preferably 5.110 Å or longer and 5.170 Å or shorter, more preferably 5.129 Å or longer and 5.165 Å or shorter, further preferably 5.131 Å or longer and 5.160 Å or shorter, $\alpha$ of 90.00°, $\gamma$ of 90.00°, $\beta$ of 89.00° or more and 89.40° or less, preferably 89.10° or more and 89.30° or less, more preferably 89.15° or more and 89.29° or less, further preferably 89.15° or more and 89.25° or less.

In the present embodiment, NaCoPC has lattice constants a of 8.875 Å or longer and 8.940 Å or shorter, preferably 8.880 Å or longer and 8.930 Å or shorter, more preferably 8.885 Å or longer and 8.930 Å or shorter, further preferably 8.900 Å or longer and 8.925 Å or shorter, b of 6.605 Å or longer and 6.660 Å or shorter, preferably 6.615 Å or longer and 6.650 Å or shorter, more preferably 6.625 Å or longer and 6.645 Å or shorter, c of 5.125 Å or longer and 5.175 Å or shorter, preferably 5.130 Å or longer and 5.165 Å or shorter, more preferably 5.135 Å or longer and 5.160 Å or shorter, further preferably 5.140 Å or longer and 5.149 Å or shorter, $\alpha$ of 90°, $\gamma$ of 90°, $\beta$ of 89.20° or more and 89.65° or less, preferably 89.30° or more and 89.55° or less, more preferably 89.35° or more and 89.52° or less, further preferably 89.35° or more and 89.48° or less.

The crystallite size (WH size) and the crystallite size may be obtained with respect to the XRD pattern measured and identified in the same manner as the purity. Further, in a case where the purity of the polyanion of the present embodiment is less than 100 mass%, they may be obtained from the XRD peaks attributable to NaMnPC.

The polyanion of the present embodiment may be in any optional form, such as a powder, granules or a molded product, and is preferably in a powder form.

In another embodiment, the polyanion is a sodium transition metal carbophosphate, and may be a sodium transition metal carbophosphate represented by the formula $Na_{3-x}MPO_4CO_3$ (M is at least one member selected from the group consisting of Fe, Mn, Ni and Co, and $0 \leq x \leq 2$).

In another embodiment, the polyanion may be a sodium transition metal carbophosphate with a content of a sodium transition metal carbophosphate represented by the formula $Na_{3-x}MPO_4CO_3$ (M is at least one member selected from the group consisting of Fe, Mn, Ni and Co, and $0 \leq x \leq 2$) being 90 mass% or higher and 100 mass% or lower.

In another embodiment, the polyanion may be a sodium transition metal polyanion with a content of a sodium transition metal carbophosphate represented by the formula $Na_{3-x}MPO_4CO_3$ (M is at least one member selected from the group consisting of Fe, Mn, Ni and Co, and $0 \leq x \leq 2$) being 90 mass% or higher and 100 mass% or lower.

In still another embodiment, the polyanion may be a sodium transition metal polyanion which contains a sodium transition metal carbophosphate represented by the formula $Na_{3-x}MPO_4CO_3$ (M is at least one member selected from the group consisting of Fe, Mn, Ni and Co, and $0 \leq x \leq 2$) and having a crystallite size of 90 Å or longer and 400 Å or shorter, and has a content of the sodium transition rare metal carbophosphate of preferably 90 mass% or higher, more preferably 98 mass% or higher.

Now, the method for producing the polyanion of the present embodiment will be described.

The method for producing the polyanion of the present embodiment is a production method comprising a step of subjecting a composition containing a sodium source, a transition metal source, a phosphate source, a carbonate source and water to hydrothermal treatment, and wherein the hydrothermal treatment temperature is 140°C or higher and 280°C or lower, and the pH of the composition is 7.5 or higher.

By the step of subjecting a composition containing a sodium source, a transition metal source, a phosphate source, a carbonate source and water (hereinafter also referred to as "raw material composition") to hydrothermal treatment (hereinafter also referred to as "hydrothermal treatment step"), the sodium transition metal polyanion can be crystallized while formation of the by-product phase is suppressed.

The sodium source is at least one of sodium and a compound containing sodium, preferably a water-soluble sodium salt. The water-soluble sodium salt may be at least one member selected from the group consisting of sodium fluoride, sodium chloride, sodium phosphate, disodium hydrogenphosphate, sodium dihydrogen phosphate, sodium sulfite, sodium sulfate, sodium hydrogen carbonate and sodium carbonate, preferably at least one member selected from the group consisting of sodium phosphate, disodium hydrogenphosphate, sodium dihydrogen phosphate, sodium sulfite, sodium sulfate, sodium hydrogen carbonate and sodium carbonate, more preferably at least one member selected from the group consisting of sodium phosphate, disodium hydrogenphosphate, sodium sulfate, sodium hydrogen carbonate and sodium carbonate. The raw material composition preferably contains two or more types of water-soluble sodium salts, so that the hydrothermal temperature range at which the sodium transition metal polyanion of the present embodiment can be crystallized tends to be wide, and the sodium transition metal polyanion of the present embodiment tends to be crystallized even at a relatively high temperature. The water-soluble sodium salt may be at least one member selected from the group consisting of sodium fluoride, sodium chloride, sodium phosphate, disodium hydrogen phosphate, sodium dihydrogen phosphate, sodium sulfite, sodium sulfate, sodium hydrogen carbonate and sodium carbonate. The raw material composition preferably contains at least two members selected from the group consisting of sodium phosphate, disodium hydrogen phosphate, sodium dihydrogen phosphate, sodium sulfite, sodium sulfate, sodium hydrogen carbonate and sodium carbonate.

The transition metal source is a compound containing at least one member selected from the group consisting of iron (Fe), manganese (Mn), nickel (Ni) and cobalt (Co), preferably a compound containing at least one member selected from the group consisting of iron, manganese and nickel, more preferably a compound containing at least one of iron and manganese. The transition metal source is preferably at least one member selected from the group consisting of an oxide, a hydroxide, an oxyhydroxide, a sulfite, a sulfate, a phosphate, a carbonate, a nitrate, a chloride and an acetate, containing at least one member selected from the group consisting of iron, manganese, nickel and cobalt, more preferably at least one of a sulfate, a phosphate and a carbonate, further preferably a sulfate.

The transition metal contained in the transition metal source is at least one member selected from the group consisting of iron, manganese, nickel and cobalt, preferably at least one member selected from the group consisting of iron, manganese and nickel, more preferably at least one of iron and manganese.

The transition metal source containing iron (hereinafter also referred to as "iron source") is preferably at least one member selected from the group consisting of iron(II) oxide, iron(III) oxide, iron hydroxide, iron oxyhydroxide, iron sulfate, iron phosphate, iron carbonate, iron nitrate, iron chloride and iron acetate, more preferably at least one member selected from the group consisting of iron sulfate, iron phosphate, iron chloride and iron carbonate.

The transition metal source containing manganese (hereinafter also referred to as "manganese source") is preferably at least one member selected from the group consisting of manganese oxide, manganese dioxide, trimanganese tetroxide, manganese hydroxide, manganese oxyhydroxide, manganese sulfate, manganese phosphate, manganese carbonate, manganese nitrate, manganese chloride and manganese acetate, more preferably at least one member selected from the group consisting of manganese sulfate, manganese phosphate, manganese carbonate and manganese chloride.

The transition metal source containing nickel (hereinafter also referred to as "nickel source") is preferably at least one member selected from the group consisting of nickel oxide, nickel hydroxide, nickel oxyhydroxide, nickel sulfate, nickel nitrate, nickel chloride and nickel acetate, more preferably at least one of nickel sulfate and nickel chloride.

The transition metal source containing cobalt (hereinafter also referred to as "cobalt source") is preferably at least one member selected from the group consisting of cobalt(II) oxide, cobalt(III) oxide, cobalt hydroxide, cobalt oxyhydroxide, cobalt sulfate, cobalt nitrate, cobalt chloride and cobalt acetate, more preferably at least one of cobalt sulfate and cobalt chloride.

The phosphate source may be a compound containing a phosphate ion ($PO_4^{3-}$), and is preferably at least one member selected from the group consisting of an alkali metal phosphate, a transition metal phosphate, iron phosphate, manganese phosphate, nickel phosphate, cobalt phosphate, phosphoric acid, sodium phosphate, sodium dihydrogen phosphate and disodium hydrogen phosphate, more preferably at least one member selected from the group consisting of iron phosphate, manganese phosphate, nickel phosphate, cobalt phosphate, phosphoric acid, sodium phosphate and disodium hydrogen phosphate.

The carbonate source may be a compound containing a carbonate ion ($CO_3^{2-}$) and is preferably at least one member selected from the group consisting of an alkali metal carbonate, a transition metal carbonate, iron carbonate, manganese carbonate, nickel carbonate, cobalt carbonate, sodium carbonate and sodium hydrogen carbonate, more preferably at least one member selected from the group consisting of iron carbonate, manganese carbonate, nickel carbonate, cobalt carbonate, sodium carbonate and sodium hydrogen carbonate.

Water may, for example, be pure water, deionized water, or water contained as water of hydration or water of constitution, constituting the raw material hydrate such as the transition metal source, or an aqueous solution.

The raw material composition may contain additives, in addition to the raw materials such as the sodium source, the transition metal source, the phosphate source and the carbonate source, and water. The additive is preferably at least one member selected from the group consisting of oxalic acid, ascorbic acid, sulfurous acid, sodium sulfite, thiosulfuric acid, sodium thiosulfate, sodium monohydrogensulfide, hydrazine and sodium hypochlorite, more preferably at least one member selected from the group consisting of ascorbic acid, sulfurous acid, sodium sulfite, thiosulfuric acid, sodium thiosulfate, sodium monohydrogensulfide and sodium hypochlorite.

The raw material composition may be obtained by mixing the raw materials, water and as the case requires, additives, by an optional method. The atmosphere in which the raw materials are mixed is optional, and may, for example, be at least one member selected from the group consisting of an oxidizing atmosphere in which oxygen gas is present, such as air atmosphere, a reducing atmosphere and an inert atmosphere, and is preferably an oxidizing atmosphere in which oxygen gas is present. In view of simplicity, the atmosphere in which the raw materials are mixed is particularly preferably air atmosphere.

In the present embodiment, the hydrothermal treatment temperature is 140°C or higher and 280°C or lower. The hydrothermal treatment temperature is a temperature at which the raw material composition is subjected to hydrothermal treatment. When the hydrothermal treatment temperature is 140°C or higher, the crystallite size tends to be large.

In the present embodiment, in a case where the raw material composition is subjected to hydrothermal treatment, the hydrothermal treatment temperature is preferably 150°C or higher and 250°C or lower, more preferably 160°C or higher and 230°C or lower, further preferably 170°C or higher and 220°C or lower, still more preferably 180°C or higher and less than 220°C.

In the present embodiment, the pH of the raw material composition is 7.5 or higher, preferably 10.0 or higher. In crystallization at a hydrothermal treatment temperature of 150°C or higher, the pH of the raw material composition is preferably 7.5 or higher and 12.5 or lower, more preferably 10.5 or higher and 11.5 or lower. The pH of the raw material composition is a value of the raw material composition at a point when the hydrothermal treatment is started, and the pH value may change during the hydrothermal treatment.

In the present embodiment, the pH of the raw material composition containing the iron source is preferably 8.0 or higher and 12.0 or lower, more preferably 9.5 or higher and 12.0 or lower, further preferably 10.5 or higher and 11.5 or lower.

In the present embodiment, the pH of the raw material composition containing the manganese source is preferably 8.5 or higher and 12.5 or lower, more preferably 10.0 or higher and 12.5 or lower, further preferably 10.5 or higher and 11.5 or lower.

In the present embodiment, the pH of the raw material composition containing the nickel source is preferably 7.5 or higher and 12.5 or lower, more preferably 8.0 or higher and 12.0 or lower, further preferably 9.5 or higher and 11.0 or lower.

In the present embodiment, the pH of the raw material composition containing the cobalt source is preferably 8.5 or higher and 12.5 or lower, more preferably 10.5 or higher and 11.5 or lower.

In the hydrothermal treatment step in the present embodiment, the hydrothermal treatment is carried out preferably in a state where the raw material composition is packed in a reactor. The reactor may, for example, be a sealed pressure-resistant container having the inner surface covered with a fluororesin.

In the present embodiment, the hydrothermal treatment reaction time depends on the reaction temperature. The reaction temperature is preferably 4 hours or longer and 100 hours or shorter, more preferably 10 hours or longer and 50 hours or shorter, more preferably 10 hours or longer and 30 hours or shorter.

The production method of the present embodiment may contain at least one member selected from the group consisting of a washing step, a separation step and a drying step.

The washing step is a step of removing water-soluble impurities from the sodium transition metal polyanion obtained by the hydrothermal treatment step. The washing method is optional and may, for example, be a treatment of dispersing the sodium transition metal polyanion in a sufficient amount of pure water. This treatment may be conducted several times.

The separation step is a step of separating the sodium transition metal polyanion and the solvent. The separation method is optional and may, for example, be at least one method selected from the group consisting of centrifugal separation, filtration and filter press.

The drying step is a step of removing moisture adsorbed in the sodium transition metal polyanion. The drying method is optional and may, for example, be treatment in air or in vacuum at 80°C or higher and 120°C or lower for 1 hour or longer and 10 hours or shorter, and is preferably treatment in vacuum.

The polyanion of the present embodiment may be used for an adsorbent, an ion exchanger, a hydrogen ion conductor, a solid electrolyte and a battery material, since intercalation and deintercalation of sodium ions ($Na^+$) will readily proceed. The polyanion of the present embodiment is used preferably as a cathode active material, particularly a cathode active material of a sodium secondary battery.

When the polyanion of the present embodiment is used as a cathode active material of a sodium secondary battery, it may be formed into a cathode mixture containing the polyanion of the present embodiment and as the case requires, at least one of a binder and an electrically conductive material, and the resulting cathode mixture is used as a cathode. As the binder and the electrically conductive material, known ones may be used.

A sodium secondary battery having a cathode containing the polyanion of the present embodiment has a high charge and discharge capacity as compared with a conventional sodium secondary battery.

A sodium secondary battery is a secondary battery having a cathode, an anode and an electrolyte. The sodium secondary battery in the present embodiment is characterized by having, as the cathode, a cathode containing the polyanion of the present embodiment, and may have, as the anode and the electrolyte, optional ones.

The anode may be made of a material having sodium intercalation/deintercalation capability, which may be conventionally used by those skilled in the art, and may, for example, be platinum, a carbon material, a material forming an alloy with sodium, a sodium-containing transition metal oxide, or a sodium-containing polyanion material.

The electrolyte may be at least one of an electrolytic solution and a solid electrolyte which may be conventionally used by those skilled in the art.

The electrolytic solution may, for example, be an organic electrolytic solution having a sodium salt and various additives dissolved in an organic solvent. The solid electrolyte may, for example, be a sodium ion conductive solid electrolyte.

EXAMPLES

Now, the present embodiment will be described in further detail with reference to Examples. However, it should be understood that the present embodiment is by no means restricted to such specific Examples.

<Identification of crystal phase>

The crystal phase of each of the products obtained in Examples and Comparative Examples was measured by powder X-ray diffraction. The powder X-ray diffraction was conducted using an X-ray diffraction apparatus (apparatus name: SmartLab, manufactured by Rigaku Corporation) under the following conditions.

| | |
|---|---|
| Radiation source | :CuK$\alpha$ rays ($\lambda$=1.5405 Å) |
| Measurement mode | :Step scanning |
| Scanning condition | :20°/min |
| Measurement time | :3 seconds |
| Measurement range | :2$\theta$ = 5° to 90° |

In order to determine the composition ratio of the transition metal and sodium metal, by data processing software PDXL-2 attached to the X-ray diffraction apparatus (apparatus name: SmartLab, manufactured by Rigaku Corporation), Rietveld refinement was conducted to identify the crystal phase of the product. After the identification, the purity of NaMPC was obtained by RIR method.

<Composition analysis>

The composition of the sample was measured by using an inductively coupled plasma spectrometer (apparatus name: ICP-AES manufactured by PerkinElmer Japan Co., Ltd.).

<Sample observation>

A sample was deposited on a carbon tape, followed by gold sputtering, and the carbon tape was set on a brass holder, and the sample was observed by a scanning electron microscope (apparatus name: JSM-IT100, manufactured by JEOL Ltd.) with 10,000 magnifications.

<Preparation of sodium secondary battery>

The sodium transition metal polyanion and an electrically conductive binder (trade name: TAB-2, manufactured by Hohsen Corp.) were weighed in a mass ratio of 2:1 and mixed in an agate mortar to obtain a cathode mixture. The obtained cathode mixture was placed on a SUS mesh (SUS316) having a diameter of 8 mm, and uniaxially pressed under 1 ton/cm$^2$ to obtain cathode mixture pellets. The cathode mixture pellets were vacuum dried at 150°C for 2 hours to obtain a cathode.

Using the obtained cathode, a sodium secondary battery comprising three electrode electrochemical cells having the following structure was prepared.

| | |
|---|---|
| Test electrode | : cathode |
| Counter electrode | : platinum (Pt) plate |
| Reference electrode | : saturated calomel electrode |
| Electrolytic solution | : |
| (electrolyte) NaPF$_6$ 1 mol/dm$^3$ | |
| (solvent) ethylene carbonate (EC):dimethyl carbonate (DMC)=1:1 (volume | |

(continued)

ratio)

<Measurement of charge and discharge capacity>

The prepared sodium secondary battery was subjected to constant current charge and discharge test. The evaluation conditions are as follows.

| Temperature | : room temperature ($24.5\pm2.5°C$ that is 22 to 27°C) |
|---|---|
| Electrode potential | : -2.18 to 2.02V (saturated calomel reference electrode) |
| Current value | : constant at 1 mA/cm$^2$ |
| Number of charge and discharge | : 10 cycles |

Such electrode potential vs. the saturated calomel reference electrode corresponds to 0.76 to 4.98V vs. the sodium electrode.

(Synthesis of sodium iron carbophosphate)

Example 1-1

Iron(II) sulfate heptahydrate ($FeSO_4\cdot7H_2O$), sodium phosphate dodecahydrate ($Na_3PO_4\cdot12H_2O$) and anhydrous sodium carbonate ($Na_2CO_3$) were ground and mixed, and pure water was added to the mixture to obtain a composition having the following composition and having a pH of 11.0.

| Iron(II) sulfate heptahydrate : | 13.6 mass% |
|---|---|
| Sodium phosphate dodecahydrate: | 18.7 mass% |
| Anhydrous sodium carbonate : | 5.2 mass% |
| Pure water : | the rest |

The composition was packed and sealed in a Teflon (registered trademark) resin container with a lid in an air atmosphere, the container was placed in a constant temperature oven, and hydrothermal treatment was applied under the following conditions.

| Hydrothermal treatment temperature | : 180°C |
|---|---|
| Hydrothermal treatment time | : 16 hours |
| Hydrothermal treatment pressure | : under autogenous pressure |

After the hydrothermal treatment, the product cooled to room temperature was mixed with pure water in a sufficient amount and stirred to be washed, and subjected to suction filtration using a filter paper with a pore size of 0.2 $\mu$m to obtain sodium iron carbophosphate in this Example.

The sodium iron carbophosphate in this Example was dried in vacuum at 110°C for 4 hours and ground in a mortar. The sodium iron carbophosphate in this Example had a $Na_3FePO_4CO_3$ purity of 100 mass%, and no crystallized product other than $Na_3FePO_4CO_3$ was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

| (020) plane: | $2\theta=26.86°$ (relative intensity=81) |
|---|---|
| (220) plane: | $2\theta=33.57°$ (relative intensity=78) |
| (002) plane: | $2\theta=34.80°$ (relative intensity=100) |

Example 1-2

Sodium iron carbophosphate in this Example was obtained in the same manner as in Example 1-1 except that the raw material composition had the following composition and had a pH of 11.0 and that the hydrothermal treatment time was 72 hours.

| | |
|---|---|
| Iron(II) sulfate heptahydrate : | 14.1 mass% |
| Sodium phosphate dodecahydrate: | 14.6 mass% |
| Anhydrous sodium carbonate : | 6.7 mass% |
| Pure water : | the rest |

The sodium iron carbophosphate in this Example had a $Na_3FePO_4CO_3$ purity of 100 mass%, and no crystallized product other than $Na_3FePO_4CO_3$ was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

(020) plane: $2\theta=26.89°$ (relative intensity=96)
(220) plane: $2\theta=33.64°$ (relative intensity=93)
(002) plane: $2\theta=34.80°$ (relative intensity=100)

Example 1-3

Sodium iron carbophosphate in this Example was obtained in the same manner as in Example 1-1 except that the raw material composition had the following composition and had a pH of 11.0 and that the hydrothermal treatment time was 6 hours.

| | |
|---|---|
| Iron(II) sulfate heptahydrate : | 13.6 mass% |
| Sodium phosphate dodecahydrate: | 18.7 mass% |
| Anhydrous sodium carbonate : | 5.2 mass% |
| Pure water : | the rest |

The sodium iron carbophosphate in this Example had a $Na_3FePO_4CO_3$ purity of 100 mass%, and no crystallized product other than $Na_3FePO_4CO_3$ was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

(020) plane: $2\theta=26.87°$ (relative intensity=72)
(220) plane: $2\theta=33.56°$ (relative intensity=82)
(002) plane: $2\theta=34.80°$ (relative intensity=100)

Example 1-4

Sodium iron carbophosphate in this Example was obtained in the same manner as in Example 1-1 except that the raw material composition had the following composition and had a pH of 11.0 and that the hydrothermal treatment time was 48 hours.

| | |
|---|---|
| Iron(II) sulfate heptahydrate : | 15.5 mass% |
| Sodium phosphate dodecahydrate: | 21.4 mass% |
| Anhydrous sodium carbonate : | 5.9 mass% |
| Pure water : | the rest |

The sodium iron carbophosphate in this Example had a $Na_3FePO_4CO_3$ purity of 100 mass%, and no crystallized product other than $Na_3FePO_4CO_3$ was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

(020) plane: $2\theta=26.90°$ (relative intensity=100)
(220) plane: $2\theta=33.62°$ (relative intensity=93)
(002) plane: $2\theta=34.80°$ (relative intensity=85)

Example 1-5

Sodium iron carbophosphate in this Example was obtained in the same manner as in Example 1-1 except that the raw material composition had the following composition and had a pH of 11.0 and that the hydrothermal treatment temperature was 160°C.

| | |
|---|---|
| Iron(II) sulfate heptahydrate : | 14.0 mass% |
| Sodium phosphate dodecahydrate: | 19.2 mass% |
| Anhydrous sodium carbonate | 6.7 mass% |
| Pure water | the rest |

The sodium iron carbophosphate in this Example had a $Na_3FePO_4CO_3$ purity of 100 mass%, and no crystallized product other than $Na_3FePO_4CO_3$ was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

(020) plane: $2\theta$=26.93° (relative intensity=100)
(220) plane: $2\theta$=33.68° (relative intensity=91)
(002) plane: $2\theta$=34.80° (relative intensity=87)

Example 1-6

Sodium iron carbophosphate in this Example was obtained in the same manner as in Example 1-5 except that the hydrothermal treatment temperature was 220°C.

| | |
|---|---|
| Iron(II) sulfate heptahydrate : | 14.0 mass% |
| Sodium phosphate dodecahydrate: | 19.2 mass% |
| Anhydrous sodium carbonate : | 6.7 mass% |
| Pure water : | the rest |

The sodium iron carbophosphate in this Example had a $Na_3FePO_4CO_3$ purity of 100 mass%, and no crystallized product other than $Na_3FePO_4CO_3$ was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

(020) plane: $2\theta$=26.93° (relative intensity=100)
(220) plane: $2\theta$=33.67° (relative intensity=88)
(002) plane: $2\theta$=34.80° (relative intensity=84)

Example 1-7

Sodium iron carbophosphate in this Example was obtained in the same manner as in Example 1-5 except that the raw material composition had the following composition and had a pH of 11.0 and that the hydrothermal treatment temperature was 220°C.

| | |
|---|---|
| Iron(II) sulfate heptahydrate : | 14.1 mass% |
| Sodium phosphate dodecahydrate: | 19.5 mass% |
| Anhydrous sodium carbonate : | 5.4 mass% |
| Pure water : | the rest |

The sodium iron carbophosphate in this Example had a NaFePC purity of 100 mass%, and no crystalized product other than NaFePC was confirmed in its XRD pattern. $Na_3FePO_4CO_3$ as the sodium iron carbophosphate in this Example is a compound having a monoclinic crystal system, having a Bonshtedite structure and belonging to the space group P21/m, and the main XRD peaks were as follows.

(020) plane: 2θ=26.92° (relative intensity=100)
(220) plane: 2θ=33.65° (relative intensity=98)
(002) plane: 2θ=34.80° (relative intensity=95)

Example 1-8

Sodium iron carbophosphate in this Example was obtained in the same manner as in Example 1-5 except that the hydrothermal treatment temperature was 220°C.

| Iron(II) sulfate heptahydrate : | 14.0 mass% |
| Sodium phosphate dodecahydrate: | 19.2 mass% |
| Anhydrous sodium carbonate : | 6.7 mass% |
| Pure water : | the rest |

The sodium iron carbophosphate in this Example had a NaFePC purity of 100 mass%. NaFePC as the sodium iron carbophosphate in this Example is a compound having a monoclinic crystal system, having a Bonshtedite structure and belonging to the space group P21/m, and the main XRD peaks were as follows.

(020) plane: 2θ=26.94° (relative intensity=100)
(220) plane: 2θ=33.69° (relative intensity=92)
(002) plane: 2θ=34.80° (relative intensity=91)

Example 1-9

Sodium iron carbophosphate in this Example was obtained in the same manner as in Example 1-8 except that the hydrothermal treatment time was 96 hours.

| Iron(II) sulfate heptahydrate : | 14.0 mass% |
| Sodium phosphate dodecahydrate: | 19.2 mass% |
| Anhydrous sodium carbonate : | 6.7 mass% |
| Pure water : | the rest |

The sodium iron carbophosphate in this Example had a NaFePC purity of 100 mass%, and no crystalized product other than NaFePC was confirmed in its XRD pattern. NaFePC as the sodium iron carbophosphate in this Example is a compound having a monoclinic crystal system, having a Bonshtedite structure and belonging to the space group P21/m, and the main XRD peaks were as follows.

(020) plane: 2θ=26.92° (relative intensity=100)
(220) plane: 2θ=33.67° (relative intensity=93)
(002) plane: 2θ=34.80° (relative intensity=94)

[Table 1]

|  | Purity (mass%) | WH size (A) | Lattice constants | | | |
|  |  |  | a (Å) | b (Å) | c (Å) | β (°) |
| Example 1-1 | 100 | 270 | 8.953 | 6.633 | 5.152 | 89.583 |
| Example 1-2 | 100 | 326 | 8.950 | 6.623 | 5.149 | 89.548 |
| Example 1-3 | 100 | 176 | 8.953 | 6.634 | 5.151 | 89.630 |
| Example 1-4 | 100 | 322 | 8.960 | 6.626 | 5.154 | 89.536 |
| Example 1-5 | 100 | 274 | 8.959 | 6.626 | 5.152 | 89.548 |
| Example 1-6 | 100 | 312 | 8.961 | 6.627 | 5.154 | 89.524 |
| Example 1-7 | 100 | 284 | 8.961 | 6.627 | 5.154 | 89.524 |

(continued)

|  | Purity (mass%) | WH size (A) | Lattice constants | | | |
| --- | --- | --- | --- | --- | --- | --- |
|  |  |  | a (Å) | b (Å) | c (Å) | β (°) |
| Example 1-8 | 100 | 337 | 8.964 | 6.629 | 5.155 | 89.536 |
| Example 1-9 | 100 | 352 | 8.964 | 6.629 | 5.155 | 89.536 |

It is found that the sodium transition metal polyanion having a NaFePC single phase is crystalized even when the hydrothermal treatment temperature is 180°C or higher in the production method in these Examples.

Comparative Example 1-1

A precipitate in this Comparative Example was obtained in the same manner as in Example 1-1 except that the raw material composition had the following composition and had a pH of 11.0 and that the hydrothermal treatment temperature was 120°C.

| | |
|---|---|
| Iron(II) sulfate heptahydrate | 14.1 mass% |
| Sodium phosphate dodecahydrate: | 19.5 mass% |
| Anhydrous sodium carbonate : | 5.4 mass% |
| Pure water : | the rest |

The precipitate in this Comparative Example was an amorphous substance containing $Na_3Fe_3(PO_4)_4$, and no NaFePC was obtained.

(Synthesis of sodium manganese carbophosphate)

Example 2-1

Manganese sulfate pentahydrate ($MnSO_4 \cdot 5H_2O$), sodium phosphate dodecahydrate ($Na_3PO_4 \cdot 12H_2O$) and anhydrous sodium carbonate ($Na_2CO_3$) were ground and mixed, and pure water was added to the mixture to obtain a composition having the following composition and having a pH of 11.0.

| | |
|---|---|
| Manganese sulfate pentahydrate : | 12.0 mass% |
| Sodium phosphate dodecahydrate: | 18.9 mass% |
| Anhydrous sodium carbonate : | 5.2 mass% |
| Pure water : | the rest |

The composition was packed and sealed in a Teflon (registered trademark) resin container with a lid, the container was placed in a constant temperature oven, and hydrothermal treatment was applied under the following conditions.

| | |
|---|---|
| Hydrothermal treatment temperature : | 180°C |
| Hydrothermal treatment time | 72 hours |
| Hydrothermal treatment pressure | under autogenous pressure |

After the hydrothermal treatment, the product cooled to room temperature was mixed with pure water in a sufficient amount and stirred to be washed, and subjected to suction filtration using a filter paper with a pore size of 0.2 μm to obtain sodium manganese carbophosphate in this Example.
The sodium manganese carbophosphate in this Example was dried in vacuum at 110°C for 4 hours and ground in a mortar. The sodium manganese carbophosphate in this Example had a NaMnPC purity of 100 mass%, and no crystallized product other than NaMnPC was confirmed in its XRD pattern. NaMnPC as the sodium manganese carbophosphate in this Example is a compound having a monoclinic crystal system, having a Sidorenkite structure isomorphic to a Bonshtedite structure and belonging to the space group P21/m, and the main XRD peaks were as follows.

(020) plane: 2θ=26.44° (relative intensity=100)
(220) plane: 2θ=33.25° (relative intensity=100)
(002) plane: 2θ=34.68° (relative intensity=72)

Example 2-2

Sodium manganese carbophosphate in this Example was obtained in the same manner as in Example 2-1 except that the raw material composition had the following composition and had a pH of 11.0, that the hydrothermal treatment temperature was 200°C, and that the hydrothermal treatment time was 16 hours.

| | |
|---|---|
| Manganese sulfate pentahydrate : | 12.3 mass% |
| Sodium phosphate dodecahydrate: | 19.4 mass% |
| Anhydrous sodium carbonate : | 5.4 mass% |
| Pure water : | the rest |

The sodium manganese carbophosphate in this Example had a NaMnPC purity of 98 mass%, and the by-product phase was $Mn(OH)_2$. NaMnPC as the sodium manganese carbophosphate in this Example is a compound having a monoclinic crystal system, having a Sidorenkite structure and belonging to the space group P21/m, and the main XRD peaks were as follows.

(020) plane: 2θ=26.39° (relative intensity=100)
(220) plane: 2θ=33.19° (relative intensity=96)
(002) plane: 2θ=34.63° (relative intensity=64)

Example 2-3

Sodium manganese carbophosphate in this Example was obtained in the same manner as in Example 2-2 except that the raw material composition had the following composition and had a pH of 11.0 and that the hydrothermal treatment time was 24 hours.

| | |
|---|---|
| Manganese sulfate pentahydrate : | 13.1 mass% |
| Sodium phosphate dodecahydrate: | 20.6 mass% |
| Anhydrous sodium carbonate : | 5.7 mass% |
| Pure water : | the rest |

The sodium manganese carbophosphate in this Example had a NaMnPC purity of 100 mass%, and no crystalized product other than NaMnPC was confirmed in its XRD pattern, and no by-product phase was contained. NaMnPC as the sodium manganese carbophosphate in this Example is a compound having a monoclinic crystal system, having a Sidorenkite structure and belonging to the space group P21/m, and the main XRD peaks were as follows.

(020) plane: 2θ=26.47° (relative intensity=94)
(220) plane: 2θ=33.28° (relative intensity=100)
(002) plane: 2θ=34.72° (relative intensity=69)

Example 2-4

Sodium manganese carbophosphate in this Example was obtained in the same manner as in Example 2-1 except that the raw material composition had the following composition and had a pH of 11.0 and that the hydrothermal treatment time was 16 hours.

| | |
|---|---|
| Manganese sulfate pentahydrate : | 12.4 mass% |
| Sodium phosphate dodecahydrate: | 19.6 mass% |
| Anhydrous sodium carbonate | 6.8 mass% |
| Pure water | the rest |

The sodium manganese carbophosphate in this Example had a NaMnPC purity of 100 mass%, and no crystalized product other than NaMnPC was confirmed in its XRD pattern, and no by-product phase was contained. NaMnPC as the sodium manganese carbophosphate in this Example is a compound having a monoclinic crystal system, having a Sidorenkite structure and belonging to the space group P21/m, and the main XRD peaks were as follows.

(020) plane: $2\theta=26.42°$ (relative intensity=97)
(220) plane: $2\theta=33.21°$ (relative intensity=100)
(002) plane: $2\theta=34.73°$ (relative intensity=60)

Example 2-5

Sodium manganese carbophosphate in this Example was obtained in the same manner as in Example 2-4 except that the raw material composition had the following composition and had a pH of 11.0.

| | |
|---|---|
| Manganese sulfate pentahydrate : | 12.3 mass% |
| Sodium phosphate dodecahydrate: | 19.3 mass% |
| Anhydrous sodium carbonate : | 8.1 mass% |
| Pure water : | the rest |

The sodium manganese carbophosphate in this Example had a NaMnPC purity of 99 mass%, and the by-product phase was $Mn(OH)_2$. NaMnPC as the sodium manganese carbophosphate in this Example is a compound having a monoclinic crystal system, having a Sidorenkite structure and belonging to the space group P21/m, and the main XRD peaks were as follows.

(020) plane: $2\theta=26.45°$ (relative intensity=100)
(220) plane: $2\theta=33.29°$ (relative intensity=87)
(002) plane: $2\theta=34.77°$ (relative intensity=56)

A sodium secondary battery having the sodium manganese carbophosphate in this Example as the cathode active material was prepared, and the charge and discharge capacity was measured and as a result, the discharge capacity at the 10th cycle was 96 mAh/g, and accordingly it is found that the sodium transition metal polyanion in this Example can be used as a cathode active material of a sodium secondary battery.

Example 2-6

Sodium manganese carbophosphate in this Example was obtained in the same manner as in Example 2-1 except that the raw material composition had the following composition and had a pH of 11.0.

| | |
|---|---|
| Manganese sulfate pentahydrate : | 12.0 mass% |
| Sodium phosphate dodecahydrate: | 19.0 mass% |
| Anhydrous sodium carbonate : | 9.7 mass% |
| Pure water : | the rest |

The sodium manganese carbophosphate in this Example had a NaMnPC purity of 98 mass%, and the by-product phase was $Mn(OH)_2$. NaMnPC as the sodium manganese carbophosphate in this Example is a compound having a monoclinic crystal system, having a Sidorenkite structure and belonging to the space group P21/m, and the main XRD peaks were as follows.

(020) plane: $2\theta=26.41°$ (relative intensity=100)
(220) plane: $2\theta=33.26°$ (relative intensity=78)
(002) plane: $2\theta=34.64°$ (relative intensity=40)

Example 2-7

Sodium manganese carbophosphate in this Example was obtained in the same manner as in Example 2-1 except that the raw material composition had the following composition and had a pH of 11.0 and that the hydrothermal treatment temperature was 160°C.

| | |
|---|---|
| Manganese sulfate pentahydrate : | 12.6 mass% |
| Sodium phosphate dodecahydrate: | 19.9 mass% |
| Anhydrous sodium carbonate : | 5.5 mass% |
| Pure water : | the rest |

The sodium manganese carbophosphate in this Example had a NaMnPC purity of 100 mass%, and no crystalized product other than NaMnPC was confirmed in its XRD pattern, and no by-product phase was contained. NaMnPC as the sodium manganese carbophosphate in this Example is a compound having a monoclinic crystal system, having a Sidorenkite structure and belonging to the space group P21/m, and the main XRD peaks were as follows.

(020) plane: $2\theta$=26.42° (relative intensity=100)
(220) plane: $2\theta$=33.21° (relative intensity=95)
(002) plane: $2\theta$=34.59° (relative intensity=54)

Example 2-8

Sodium manganese carbophosphate in this Example was obtained in the same manner as in Example 2-7 except that the hydrothermal treatment temperature was 220°C.
The sodium manganese carbophosphate in this Example had a NaMnPC purity of 93 mass%, and the by-product phase was $Mn(OH)_2$. NaMnPC as the sodium manganese carbophosphate in this Example is a compound having a monoclinic crystal system, having a Sidorenkite structure and belonging to the space group P21/m, and the main XRD peaks were as follows.

(020) plane: $2\theta$=26.43° (relative intensity=100)
(220) plane: $2\theta$=33.23° (relative intensity=97)
(002) plane: $2\theta$=34.76° (relative intensity=64)

Example 2-9

Sodium manganese carbophosphate in this Example was obtained in the same manner as in Example 2-7 except that the hydrothermal treatment temperature was 200°C.
The sodium manganese carbophosphate in this Example had a NaMnPC purity of 100 mass%, no crystalized product other than NaMnPC was confirmed in its XRD pattern, and no by-product phase was contained. NaMnPC as the sodium manganese carbophosphate in this Example is a compound having a monoclinic crystal system, having a Sidorenkite structure and belonging to the space group P21/m, and the main XRD peaks were as follows.

(020) plane: $2\theta$=26.42° (relative intensity=100)
(220) plane: $2\theta$=33.20° (relative intensity=100)
(002) plane: $2\theta$=34.72° (relative intensity=61)

[Table 2]

| | Purity (mass%) | WH size (Å) | Lattice constants | | | |
|---|---|---|---|---|---|---|
| | | | a (Å) | b (Å) | c (Å) | β (°) |
| Example 2-1 | 100 | 172 | 9.003 | 6.745 | 5.166 | 90.160 |
| Example 2-2 | 98 | 151 | 9.003 | 6.745 | 5.166 | 90.160 |
| Example 2-3 | 100 | 145 | 8.981 | 6.729 | 5.154 | 90.160 |
| Example 2-4 | 100 | 115 | 9.017 | 6.761 | 5.175 | 90.167 |
| Example 2-5 | 99 | 98 | 9.017 | 6.761 | 5.176 | 90.167 |
| Example 2-6 | 98 | 177 | 9.017 | 6.761 | 5.176 | 90.167 |
| Example 2-7 | 100 | 116 | 9.017 | 6.761 | 5.176 | 90.167 |

(continued)

|  | Purity (mass%) | WH size (Å) | Lattice constants | | | |
|---|---|---|---|---|---|---|
|  |  |  | a (Å) | b (Å) | c (Å) | β (°) |
| Example 2-8 | 93 | 178 | 9.017 | 6.761 | 5.176 | 90.167 |
| Example 2-9 | 100 | 139 | 9.017 | 6.761 | 5.176 | 90.167 |

(Synthesis of sodium nickel carbophosphate)

Example 3-1

Nickel sulfate hexahydrate ($NiSO_4 \cdot 6H_2O$), sodium phosphate dodecahydrate ($Na_3PO_4 \cdot 12H_2O$), anhydrous sodium carbonate ($Na_2CO_3$) and anhydrous sodium sulfite ($Na_2SO_3$) were ground and mixed, and pure water was added to the mixture to obtain a composition having the following composition and having a pH of 11.0.

| | |
|---|---|
| nickel sulfate hexahydrate : | 13.7 mass% |
| Sodium phosphate dodecahydrate: | 19.6 mass% |
| Anhydrous sodium carbonate : | 5.4 mass% |
| Pure water : | the rest |

The composition was packed and sealed in a Teflon (registered trademark) resin container with a lid, the container was placed in a constant temperature oven, and hydrothermal treatment was applied under the following conditions.

| | |
|---|---|
| Hydrothermal treatment temperature | : 180°C |
| Hydrothermal treatment time | : 16 hours |
| Hydrothermal treatment pressure | : under autogenous pressure |

After the hydrothermal treatment, the product cooled to room temperature was mixed with pure water in a sufficient amount and stirred to be washed, and subjected to suction filtration using a filter paper with a pore size of 0.2 μm to obtain sodium nickel carbophosphate in this Example.

The sodium nickel carbophosphate in this Example was dried in vacuum at 110°C for 4 hours and ground in a mortar. The sodium nickel carbophosphate in this Example had a NaNiPC purity of 100 mass%, and no crystallized product other than NaNiPC was confirmed in its XRD pattern. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: $2\theta=26.91°$ (relative intensity=96)
(220) plane: $2\theta=33.68°$ (relative intensity=100)
(002) plane: $2\theta=34.89°$ (relative intensity=88)

Example 3-2

Sodium nickel carbophosphate in this Example was obtained in the same manner as in Example 3-1 except that the raw material composition had the following composition.

| | |
|---|---|
| Nickel sulfate hexahydrate : | 13.7 mass% |
| Sodium phosphate dodecahydrate: | 19.6 mass% |
| Anhydrous sodium carbonate : | 5.4 mass% |
| Pure water : | the rest |

The sodium nickel carbophosphate in this Example had a NaNiPC purity of 100 mass%, and no crystallized product other than NaNiPC was confirmed in its XRD pattern. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: 2θ=26.99° (relative intensity=100)
(220) plane: 2θ=33.80° (relative intensity=90)
(002) plane: 2θ=34.95° (relative intensity=88)

Example 3-3

Sodium nickel carbophosphate in this Example was obtained in the same manner as in Example 3-1 except that the raw material composition had the following composition.

| | |
|---|---|
| Nickel sulfate hexahydrate : | 13.1 mass% |
| Sodium phosphate dodecahydrate: | 18.7 mass% |
| Anhydrous sodium carbonate : | 9.6 mass% |
| Pure water : | the rest |

The sodium nickel carbophosphate in this Example had a NaNiPC purity of 100 mass%, and no crystallized product other than NaNiPC was confirmed in its XRD pattern. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: 2θ=27.00° (relative intensity=99)
(220) plane: 2θ=33.82° (relative intensity=95)
(002) plane: 2θ=34.96° (relative intensity=100)

Example 3-4

Sodium nickel carbophosphate in this Example was obtained in the same manner as in Example 3-1 except that the raw material composition had the following composition and that the hydrothermal treatment time was 72 hours.

| | |
|---|---|
| Nickel sulfate hexahydrate : | 13.2 mass% |
| Sodium phosphate dodecahydrate: | 18.8 mass% |
| Anhydrous sodium carbonate : | 9.1 mass% |
| Pure water : | the rest |

The sodium nickel carbophosphate in this Example had a NaNiPC purity of 100 mass%, and no crystallized product other than NaNiPC was confirmed in its XRD pattern. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: 2θ=27.06° (relative intensity=100)
(220) plane: 2θ=33.87° (relative intensity=90)
(002) plane: 2θ=34.99° (relative intensity=92)

Example 3-5

Sodium nickel carbophosphate in this Example was obtained in the same manner as in Example 3-1 except that the raw material composition had the following composition and had a pH of 11.0 and that the hydrothermal treatment temperature was 160°C.

| | |
|---|---|
| Nickel sulfate hexahydrate : | 12.5 mass% |
| Sodium phosphate dodecahydrate: | 18.0 mass% |
| Anhydrous sodium carbonate : | 7.5 mass% |
| Anhydrous sodium sulfite : | 5.9 mass% |
| Pure water : | the rest |

The sodium nickel carbophosphate in this Example had a NaNiPC purity of 100 mass%, and no crystallized product other than NaNiPC was confirmed in its XRD pattern. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: $2\theta=26.94°$ (relative intensity=90)
(220) plane: $2\theta=33.70°$ (relative intensity=100)
(002) plane: $2\theta=34.84°$ (relative intensity=89)

Example 3-6

Sodium nickel carbophosphate in this Example was obtained in the same manner as in Example 3-1 except that the raw material composition had the following composition and had a pH of 11.0 and that the hydrothermal treatment temperature was 200°C.

| | |
|---|---|
| Nickel sulfate hexahydrate : | 12.7 mass% |
| Sodium phosphate dodecahydrate: | 18.2 mass% |
| Anhydrous sodium carbonate : | 7.6 mass% |
| Anhydrous sodium sulfite : | 4.5 mass% |
| Pure water : | the rest |

The sodium nickel carbophosphate in this Example had a NaNiPC purity of 100 mass%, and no crystallized product other than NaNiPC was confirmed in its XRD pattern. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: $2\theta=27.03°$ (relative intensity=100)
(220) plane: $2\theta=33.83°$ (relative intensity=83)
(002) plane: $2\theta=34.96°$ (relative intensity=89)

Example 3-7

Sodium nickel carbophosphate in this Example was obtained in the same manner as in Example 3-1 except that the raw material composition had the following composition and had a pH of 11.0 and that the hydrothermal treatment temperature was 220°C.

| | |
|---|---|
| Nickel sulfate hexahydrate : | 13.5 mass% |
| Sodium phosphate dodecahydrate: | 19.3 mass% |
| Anhydrous sodium carbonate : | 6.7 mass% |
| Pure water : | the rest |

The sodium nickel carbophosphate in this Example had a NaNiPC purity of 97 mass%, and the by-product phase was $Ni(OH)_2$. NaNiPC as the sodium nickel carbophosphate in this Example is a compound having a monoclinic crystal system, having a structure isomorphic to a Bonshtedite structure and belonging to the space group P21/m, and the main XRD peaks were as follows.

(020) plane: $2\theta=27.06°$ (relative intensity=100)
(220) plane: $2\theta=33.88°$ (relative intensity=83)
(002) plane: $2\theta=34.98°$ (relative intensity=88)

[Table 3]

| | Purity (mass%) | WH size (A) | Lattice constants | | | |
|---|---|---|---|---|---|---|
| | | | a (Å) | b (Å) | c (Å) | β (°) |
| Example 3-1 | 100 | 107 | 8.833 | 6.613 | 5.147 | 89.287 |
| Example 3-2 | 100 | 152 | 8.919 | 6.639 | 5.157 | 89.159 |
| Example 3-3 | 100 | 158 | 8.848 | 6.607 | 5.135 | 89.224 |
| Example 3-4 | 100 | 221 | 8.836 | 6.591 | 5.129 | 89.222 |
| Example 3-5 | 100 | 115 | 8.888 | 6.628 | 5.150 | 89.157 |
| Example 3-6 | 100 | 154 | 8.843 | 6.595 | 5.132 | 89.216 |
| Example 3-7 | 97 | 210 | 8.836 | 6.595 | 5.132 | 89.213 |

Comparative Example 3-1

Crystallized product of this Comparative Example was obtained in the same manner as in Example 3-1 except that anhydrous disodium hydrogen phosphate ($Na_2HPO_4$) was used, the raw material composition had the following composition and a pH of 7.0.

| | |
|---|---|
| Nickel sulfate hexahydrate : | 14.6 mass% |
| Sodium phosphate dodecahydrate : | 10.4 mass% |
| Anhydrous disodium hydrogen phosphate : | 3.9 mass% |
| Anhydrous sodium carbonate : | 5.8 mass% |
| Pure water : | the rest |

The obtained crystalized product was a composite phase 97 mass% of which was occupied with $Ni_{1.94}O_2(OH)_2$, and no NaNiPC was obtained.

(Synthesis of sodium cobalt carbophosphate)

Example 4-1

Cobalt sulfate heptahydrate ($CoSO_4 \cdot 7H_2O$), sodium phosphate dodecahydrate ($Na_3PO_4 \cdot 12H_2O$) and anhydrous sodium carbonate ($Na_2CO_3$) were ground and mixed, and pure water was added to the mixture to obtain a composition having the following composition and having a pH of 11.0.

| | |
|---|---|
| Cobalt sulfate heptahydrate : | 14.4 mass% |
| Sodium phosphate dodecahydrate: | 19.4 mass% |
| Anhydrous sodium carbonate : | 5.4 mass% |
| Pure water : | the rest |

The composition was packed and sealed in a Teflon (registered trademark) resin container with a lid, the container was placed in a constant temperature oven, and hydrothermal treatment was applied under the following conditions.

| | |
|---|---|
| Hydrothermal treatment temperature | : 180°C |
| Hydrothermal treatment time | : 16 hours |
| Hydrothermal treatment pressure | : under autogenous pressure |

After the hydrothermal treatment, the product cooled to room temperature was mixed with pure water in a sufficient amount and stirred to be washed, and subjected to suction filtration using a filter paper with a pore size of 0.2 $\mu$m to obtain sodium cobalt carbophosphate in this Example.
The sodium cobalt carbophosphate in this Example was dried in vacuum at 110°C for 4 hours and ground in a mortar. The sodium cobalt carbophosphate in this Example had a NaCoPC purity of 100 mass%, and no crystallized product other than NaCoPC was confirmed in its XRD pattern. NaCoPC as the sodium cobalt carbophosphate in this Example is a compound having a monoclinic crystal system, having a structure isomorphic to a Bonshtedite structure and belonging to the space group P21/m, and the main XRD peaks were as follows.

(020) plane: 2θ=26.88° (relative intensity=89)
(220) plane: 2θ=33.63° (relative intensity=94)
(002) plane: 2θ=34.85° (relative intensity=100)

Example 4-2

Sodium cobalt carbophosphate in this Example was obtained in the same manner as in Example 4-1 except that the raw material composition had the following composition and had a pH of 11.0.

| | |
|---|---|
| Cobalt sulfate heptahydrate : | 13.5 mass% |
| Sodium phosphate dodecahydrate: | 22.9 mass% |
| Anhydrous sodium carbonate : | 6.3 mass% |
| Pure water : | the rest |

The sodium cobalt carbophosphate in this Example had a NaCoPC purity of 100 mass%, and no crystalized product other than NaCoPC was confirmed in its XRD pattern. NaCoPC as the sodium cobalt carbophosphate in this Example is a compound having a monoclinic crystal system, having a structure isomorphic to a Bonshtedite structure and belonging to the space group P21/m, and the main XRD peaks were as follows.

(020) plane: 2θ=26.93° (relative intensity=94)
(220) plane: 2θ=33.69° (relative intensity=100)
(002) plane: 2θ=34.87° (relative intensity=99)

Example 4-3

Sodium cobalt carbophosphate in this Example was obtained in the same manner as in Example 4-1 except that the raw material composition had the following composition and had a pH of 11.0.

| | |
|---|---|
| Cobalt sulfate heptahydrate : | 16.4 mass% |
| Sodium phosphate dodecahydrate: | 22.1 mass% |
| Anhydrous sodium carbonate : | 6.1 mass% |
| Pure water : | the rest |

The sodium cobalt carbophosphate in this Example had a NaCoPC purity of 100 mass%, and no crystalized product other than NaCoPC was confirmed in its XRD pattern. NaCoPC as the sodium cobalt carbophosphate in this Example is a compound having a monoclinic crystal system, having a structure isomorphic to a Bonshtedite structure and belonging to the space group P21/m, and the main XRD peaks were as follows.

(020) plane: 2θ=26.88° (relative intensity=78)
(220) plane: 2θ=33.64° (relative intensity=84)
(002) plane: 2θ=34.84° (relative intensity=100)

Example 4-4

Sodium cobalt carbophosphate in this Example was obtained in the same manner as in Example 4-1 except that the raw material composition had the following composition and had a pH of 11.0.

| | |
|---|---|
| Cobalt sulfate heptahydrate : | 18.0 mass% |
| Sodium phosphate dodecahydrate: | 24.4 mass% |
| Anhydrous sodium carbonate : | 6.8 mass% |
| Pure water : | the rest |

The sodium cobalt carbophosphate in this Example had a NaCoPC purity of 100 mass%, and no crystalized product other than NaCoPC was confirmed in its XRD pattern. NaCoPC as the sodium cobalt carbophosphate in this Example is a compound having a monoclinic crystal system, having a structure isomorphic to a Bonshtedite structure and belonging to the space group P21/m, and the main XRD peaks were as follows.

(020) plane: $2\theta$=26.91° (relative intensity=59)
(220) plane: $2\theta$=33.65° (relative intensity=65)
(002) plane: $2\theta$=34.84° (relative intensity=100)

Example 4-5

Sodium cobalt carbophosphate in this Example was obtained in the same manner as in Example 4-1 except that the raw material composition had the following composition and had a pH of 11.0 and that the hydrothermal treatment time was 48 hours.

| | |
|---|---|
| Cobalt sulfate heptahydrate : | 14.4 mass% |
| Sodium phosphate dodecahydrate: | 19.4 mass% |
| Anhydrous sodium carbonate : | 5.4 mass% |
| Pure water : | the rest |

The sodium cobalt carbophosphate in this Example had a NaCoPC purity of 100 mass%, and no crystalized product other than NaCoPC was confirmed in its XRD pattern. NaCoPC as the sodium cobalt carbophosphate in this Example is a compound having a monoclinic crystal system, having a structure isomorphic to a Bonshtedite structure and belonging to the space group P21/m, and the main XRD peaks were as follows.

(020) plane: $2\theta$=26.94° (relative intensity=90)
(220) plane: $2\theta$=33.68° (relative intensity=96)
(002) plane: $2\theta$=34.86° (relative intensity=100)

Example 4-6

Sodium cobalt carbophosphate in this Example was obtained in the same manner as in Example 4-1 except that the raw material composition had the following composition and had a pH of 11.0 and that the hydrothermal treatment time was 48 hours.

| | |
|---|---|
| Cobalt sulfate heptahydrate : | 16.4 mass% |
| Sodium phosphate dodecahydrate: | 22.1 mass% |
| Anhydrous sodium carbonate : | 6.1 mass% |
| Pure water : | the rest |

The sodium cobalt carbophosphate in this Example had a NaCoPC purity of 100 mass%, and no crystalized product other than NaCoPC was confirmed in its XRD pattern. NaCoPC as the sodium cobalt carbophosphate in this Example is a compound having a monoclinic crystal system, having a structure isomorphic to a Bonshtedite structure and belonging to the space group P21/m, and the main XRD peaks were as follows.

(020) plane: $2\theta$=26.93° (relative intensity=92)
(220) plane: $2\theta$=33.66° (relative intensity=92)
(002) plane: $2\theta$=34.88° (relative intensity=100)

[Table 4]

| | Purity (mass%) | WH size (Å) | Lattice constants | | | |
|---|---|---|---|---|---|---|
| | | | a (Å) | b (Å) | c (Å) | β (°) |
| Example 4-1 | 100 | 220 | 8.903 | 6.637 | 5.148 | 89.510 |

(continued)

| | Purity (mass%) | WH size (Å) | Lattice constants | | | |
|---|---|---|---|---|---|---|
| | | | a (Å) | b (Å) | c (Å) | β (°) |
| Example 4-2 | 100 | 202 | 8.903 | 6.637 | 5.140 | 89.510 |
| Example 4-3 | 100 | 219 | 8.888 | 6.627 | 5.146 | 89.393 |
| Example 4-4 | 100 | 273 | 8.888 | 6.627 | 5.146 | 89.393 |
| Example 4-5 | 100 | 353 | 8.888 | 6.627 | 5.146 | 89.393 |
| Example 4-6 | 100 | 247 | 8.921 | 6.641 | 5.153 | 89.448 |

INDUSTRIAL APPLICABILITY

The sodium transition metal polyanion of the present embodiment is applicable to a cathode active material of a sodium secondary battery.

The entire disclosure of Japanese Patent Application No. 2019-098308 filed on May 27, 2019 including specification, claims, drawings and summary is incorporated herein by reference in its entirety.

**Claims**

1.    A sodium transition metal polyanion, which has a purity of 90 mass% or higher, has a crystallite size of 90 Å or longer and 400 Å or shorter, and is represented by the formula $Na_{3-x}MPO_4CO_3$ (M is at least one member selected from the group consisting of Fe, Mn, Ni and Co, and $0 \leqq x \leqq 2$).

2.    The sodium transition metal polyanion according to Claim 1, which has lattice constants a of 8.800 Å or longer and 9.050 Å or shorter, b of 6.570 Å or longer and 6.780 Å or shorter, and c of 5.100 Å or longer and 5.190 Å or shorter.

3.    The sodium transition metal polyanion according to Claim 1 or 2, wherein M is at least one of Fe and Mn.

4.    A method for producing the sodium transition metal polyanion as defined in any one of Claims 1 to 3, which comprises a step of subjecting a composition containing a sodium source, a transition metal source, a phosphate source, a carbonate source and water to hydrothermal treatment, and wherein the hydrothermal treatment temperature is 140°C or higher and 280°C or lower, and the pH of the composition is 7.5 or higher.

5.    The method for producing the sodium transition metal polyanion according to Claim 4, wherein the hydrothermal treatment temperature is 150°C or higher and 250°C or lower, and the pH of the composition is 9.0 or higher and 12.0 or lower.

6.    The method for producing the sodium transition metal polyanion according to Claim 4 or 5, wherein the transition metal source is at least one member selected from the group consisting of an oxide, a hydroxide, an oxyhydroxide, a sulfite, a sulfate, a nitrate, a chloride, an acetate, a bromide and a fluoride, containing at least one member selected from the group consisting of Fe, Mn, Ni and Co.

7.    A cathode active material containing the sodium transition metal polyanion as defined in any one of Claims 1 to 3.

8.    A sodium secondary battery comprising a cathode active material containing the sodium transition metal polyanion as defined in any one of Claims 1 to 3.

Fig. 1

Fig. 2

Fig. 3

Fig. 4

Fig. 5

Fig. 6

Fig. 7

Fig. 8

SED 10.0kV WD11mm P.C.30 HV x10.000 1 μm
0022

**INTERNATIONAL SEARCH REPORT**

| International application No. |
| --- |
| PCT/JP2020/020985 |

A. CLASSIFICATION OF SUBJECT MATTER
Int.Cl. C01B25/45(2006.01)i, H01M4/58(2010.01)i, H01M10/054(2010.01)i
FI: C01B25/45Z, H01M4/58, H01M10/054

According to International Patent Classification (IPC) or to both national classification and IPC

B. FIELDS SEARCHED

Minimum documentation searched (classification system followed by classification symbols)
Int.Cl. C01B25/45, H01M4/58, H01M10/054

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WANG, C. L. et al., Journal of the Electrochemical Society, 162(8), pp. A1601-A1609, p. A1601, materials and methods, first paragraph, p. A1603, results and discussion, first paragraph, tables | 1-3, 7-8<br>4-6 |
| Y | JP 2013-520383 A (MASSACHUSETTS INSTITUTE OF TECHNOLOGY) 06.06.2013 (2013-06-06), claims, examples, etc. | 4-6 |
| A | WO 2017/086819 A2 (QATAR FOUNDATION FOR EDUCATION, SCIENCE AND COMMUNITY DEVELOPMENT) 26.05.2017 (2017-05-26), claims, examples | 1-8 |
| A | WO 2017/152064 A1 (CERAMATEC, INC.) 08.09.2017 (2017-09-08), claims, examples | 1-8 |

☐ Further documents are listed in the continuation of Box C.     ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14.07.2020 | 28.07.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

| INTERNATIONAL SEARCH REPORT | International application No. |
|---|---|
| Information on patent family members | PCT/JP2020/020985 |

```
JP 2013-520383 A   06.06.2013    US 2013/0089486 A1
                                  claims, examples
                                  WO 2011/103554 A1
                                  EP 2539276 A
                                  CN 102781826 A
                                  KR 10-2013-0040777 A

WO 2017/086819 A2  26.05.2017    EP 3377505 A
                                  claims, examples

WO 2017/152064 A1  08.09.2017    US 2017/0256802 A1
                                  claims, examples
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013520383 A

- JP 2019098308 A

**Non-patent literature cited in the description**

- **H. CHEN et al.** *Journal of the American Chemical Society,* 2012, vol. 134, 19619-19627

- **H. CHEN et al.** *Chemistry of Materials,* 2013, vol. 25, 2777-2786